# EUROPÄISCHE PATENTSCHRIFT

(11) **EP 3 420 134 B1**
(45) Veröffentlichungstag und Bekanntmachung des Hinweises auf die Patenterteilung: **27.01.2021**
(21) Anmeldenummer: 17715068.7
(22) Anmeldetag: 27.03.2017
(51) Int. Cl.: E01B 26/00, B61L 1/02, B61L 1/16

(54) **BEFESTIGUNGSVORRICHTUNG UND VERFAHREN ZUM BEFESTIGEN WENIGSTENS EINES SENSORS AN EINER EISENBAHNSCHIENE**
FASTENING DEVICE AND METHOD FOR FASTENING AT LEAST ONE SENSOR TO A RAILWAY RAIL
DISPOSITIF DE FIXATION ET PROCÉDÉ POUR FIXER AU MOINS UN CAPTEUR SUR UN RAIL DE CHEMIN DE FER

(30) Priorität: 25.04.2016 DE 102016206940
(43) Veröffentlichungstag der Anmeldung: 02.01.2019
(73) Patentinhaber: Siemens Mobility GmbH, 81739 München (DE)
(72) Erfinder: BAUER, Tobias, 10623 Berlin (DE); CLEMENS, Marco, 38126 Braunschweig (DE); KÖRKEMEIER, Heiner, 59556 Lippstadt-Eickelborn (DE); PECH, Horst, 38122 Braunschweig (DE); TRÜMPER, Ulf, 38302 Wolfenbüttel (DE)
(86) Internationale Anmeldenummer: PCT/EP2017/057157
(87) Internationale Veröffentlichungsnummer: WO 2017/186431

(56) Entgegenhaltungen:
- EP-A1- 1 808 531
- EP-B1- 1 960 603
- WO-A1-2012/075401
- WO-A1-2014/169385
- CN-U- 203 996 281
- DE-A1-102011 054 725

## Beschreibung

In eisenbahntechnischen Anlagen werden häufig Sensoren, wie beispielsweise Achszähler, an Eisenbahnschienen befestigt. Dazu werden in einem Schienensteg der Eisenbahnschiene Befestigungslöcher gebohrt, in denen der Sensor anschließend verschraubt werden kann. Allerdings ist das Bohren der Schiene nicht bei allen Bahnbetreibern zulässig. Für diesen Fall kann beispielsweise eine Befestigungsvorrichtung eingesetzt werden, die am Schienenfuß der Eisenbahnschiene befestigt wird und an die der Sensor anschließend geschraubt wird. Eine solche Befestigungsvorrichtung ist beispielsweise in der EP 1 960 603 B1 : oder die CN 203 996 281 U beschrieben. Allerdings ist die Schienenfußbreite unterschiedlicher Eisenbahnschienen nicht immer gleich, so dass entweder verschiedene Befestigungsvorrichtungen nötig sind oder diese eine Einstellmöglichkeit für die Breite des Schienenfußes vorsehen müssen. Dadurch ist entweder die Produktanzahl hoch oder die Befestigungsvorrichtung konstruktiv aufwendig.

Es ist somit die Aufgabe der vorliegenden Erfindung, eine Befestigungsvorrichtung und ein Verfahren zum Befestigen wenigstens eines Sensors an einer Eisenbahnschiene bereitzustellen, die konstruktiv einfach und trotzdem für unterschiedliche Schienenfußbreiten geeignet sind.

Die Aufgabe wird erfindungsgemäß gelöst durch eine Befestigungsvorrichtung nach Patentanspruch 1 zum Befestigen wenigstens eines Sensors an einer Eisenbahnschiene, mit wenigstens zwei Spannbügeln, mit wenigstens zwei gegenüberliegenden und mit einem der Spannbügel verbundenen Spannbereichen, zwischen denen der wenigstens eine Sensor und zumindest ein Teil der Eisenbahnschiene anordenbar sind und eine den wenigstens einen Sensor fixierende Spannkraft aufbringbar ist, und mit wenigstens einer mit dem Spannbügel verbundenen Spannvorrichtung, durch welche die Spannkraft aufbringbar ist.

Ferner wird die genannte Aufgabe gelöst durch ein Verfahren nach Patentanspruch 8 zum Befestigen wenigstens eines Sensors an einer Eisenbahnschiene, bei dem der wenigstens eine Sensor zur Eisenbahnschiene positioniert wird und zumindest der wenigstens eine Sensor und die Eisenbahnschiene miteinander verspannt werden.

Die erfindungsgemäße Lösung hat den Vorteil, dass der Sensor durch die Befestigungsvorrichtung und das Verfahren auf besonders einfache Weise an der Eisenbahnschiene befestigt wird, weil der Sensor im Wesentlichen lediglich durch die erzeugte Spannkraft an der Eisenbahnschiene gehalten wird. So ist der Sensor kraftschlüssig mit der Eisenbahnschiene verbunden, was die Montage des Sensors besonders einfach gestaltet. Der Sensor muss lediglich entsprechend an der Eisenbahnschiene positioniert und anschließend mit Hilfe der Befestigungsvorrichtung in seiner Position fixiert werden.

Durch die von den gegenüberliegenden Spannbereichen ausgehende Spannkraft werden der Sensor und die Eisenbahnschiene zusammengedrückt. Eine weitere Abstützung der Befestigungsvorrichtung an der Eisenbahnschiene ist nicht nötig. Mit Hilfe der Spannvorrichtung wird die Spannkraft aufgebracht. Im einfachsten Fall kann die Spannvorrichtung durch den Spannbügel selber ausgebildet sein, der beispielsweise bei der Montage elastisch verformt wird und anschließend die Spannbereiche und das Paket aus Sensor und Eisenbahnschiene wie eine Feder zusammendrückt. Mit Hilfe der erfindungsgemäßen Befestigungsvorrichtung wird der Sensor schwimmend an der Schiene befestigt, was die Befestigungsvorrichtung konstruktiv einfach gestaltet.

Um die erfindungsgemäße Befestigungsvorrichtung besonders leicht montieren zu können, weist die Befestigungsvorrichtung wenigstens ein Traversenelement und wenigstens zwei mit dem Traversenelement beweglich verbundene Spannbügel auf, und die Befestigungsvorrichtung ist von einer Montage- und Transportstellung in eine Befestigungsstellung bewegbar. In der Montage- und Transportstellung kann die Befestigungsvorrichtung im Wesentlichen flach ausgebildet sein und so besonders leicht zur Montage unter dem Schienenfuß hindurchgeschoben werden. Anschließend werden die Spannbügel ausgeklappt in die Befestigungsstellung, in der der Sensor an der Eisenbahnschiene befestigt werden kann. Der Abstand der ausgeklappten Spannbügel ist durch das Traversenelement dabei vorzugsweise passend für den zu befestigenden Sensor ausgebildet. In der Montage- und Transportstellung ist die Befestigungsvorrichtung weiterhin besonders gut transportierbar und stapelbar, wodurch die Verpackung und Lieferung besonders einfach gestaltet werden kann. Ein weiterer Vorteil dieser erfindungsgemäßen Ausgestaltung ist, dass die Befestigungsvorrichtung für die Montage an der Eisenbahnschiene nicht zerlegt werden muss. So können bei der Montage keine Teile verlorengehen.

Die erfindungsgemäße Lösung kann durch weitere vorteilhafte Ausgestaltungen weiterentwickelt werden, die im Folgenden beschrieben sind.

So kann der Spannbügel der erfindungsgemäßen Befestigungsvorrichtung so ausgestaltet sein, dass der Spannbügel bei befestigtem Sensor ohne Kontakt zu der Eisenbahnschiene anordenbar ist. Diese schwimmende Befestigung hat den Vorteil, dass keine Anpassung an unterschiedliche Schienengrößen nötig ist. Weiterhin wird auch keine Kraft, beispielsweise zum Abstützen der Befestigungsvorrichtung, in die Schiene eingeleitet, die ggf. negative Auswirkungen haben könnte.

In einer weiteren vorteilhaften Ausgestaltung kann die wenigstens eine Spannvorrichtung wenigstens eine Spannschraube aufweisen. Dies hat den Vorteil, dass mit einer Spannschraube die Spannkraft über einen großen Bereich flexibel einstellbar ist. Alternativen zur Spannschraube wären beispielsweise ein Spannhebel oder die bereits oben erwähnte elastische Verformung des Spannbügels.

Um die Spannkraft besser verteilen und einstellen zu können, kann die Befestigungsvorrichtung mehrere Spannvorrichtungen aufweisen. Dabei können die Spannvorrichtungen jeweils paarweise gegenüberliegend und die Spannbereiche ausbildend angeordnet sein. Die Schraubenenden der Spannschrauben können beispielsweise die Spannbereiche ausbilden. Beispielsweise kann die Befestigungsvorrichtung in einer Ausführungsform vier Spannschrauben aufweisen, durch die sich die Spannkraft sehr flexibel einstellen lässt und gleichmäßig verteilt.

Um die geeignete Position des Sensors an der Eisenbahnschiene einfacher finden zu können, kann die Befestigungsvorrichtung wenigstens ein Adapterelement aufweisen, das zwischen Eisenbahnschiene und Sensor anordenbar ist. Das Adapterelement kann beispielsweise ein Blech sein, das auf der einen Seite an das Schienenprofil angepasst ist und auf der anderen Seite eine Aufnahme für den Sensor aufweist.

Die Erfindung betrifft weiterhin eine Sensoranordnung, mit einer Befestigungsvorrichtung nach einer der oben beschriebenen Ausführungsformen und mit wenigstens einem Sensor, der zur Befestigung an einer Eisenbahnschiene ausgebildet ist. Die erfindungsgemäße Sensoranordnung kann besonders einfach an Eisenbahnschienen beliebigen Profils montiert werden.

In einer vorteilhaften Ausgestaltung des erfindungsgemäßen Verfahrens kann eine Befestigungsvorrichtung zur Befestigung des wenigstens einen Sensors zumindest teilweise unterhalb eines Schienenfußes der Eisenbahnschiene und ohne Kontakt zum Schienenfuß angeordnet werden. Wie oben bereits beschrieben hat dies den Vorteil, dass der Sensor unabhängig von der Größe des Schienenfußes montiert werden kann und keine Krafteinleitung in den Schienenfuß erfolgt.

Um die Befestigung des Sensors besonders einfach zu gestalten, wird die Befestigungsvorrichtung erfindungsgemäß zunächst von einer Montage- und Transportstellung zumindest teilweise unterhalb des Schienenfußes angeordnet und anschließend in eine Befestigungsstellung bewegt.

Ferner kann zwischen dem wenigstens einen Sensor und der Eisenbahnschiene vor dem Verspannen wenigstens ein Adapterelement angeordnet werden. Dies hat den bereits oben beschriebenen Vorteil, dass mit Hilfe des Adapterelements die geeignete Position des Sensors zur Eisenbahnschiene besonders einfach gefunden werden kann.

Im Folgenden wird die Erfindung mit Bezug auf die beigefügten Zeichnungen erläutert.

Es zeigen:
- Figur 1: eine schematische Darstellung einer Befestigungsvorrichtung;
- Figur 2: eine schematische Darstellung einer beispielhaften Ausführungsform der erfindungsgemäßen Befestigungsvorrichtung in einer Montage- und Transportstellung;
- Figur 3: eine schematische Darstellung der Befestigungsvorrichtung aus Figur 2 in einer Befestigungsstellung;
- Figur 4: eine schematische Darstellung der Befestigungsvorrichtung aus Figur 2, die einen Sensor an einer Eisenbahnschiene befestigt;
- Figur 5: eine schematische Darstellung einer anderen Befestigungsvorrichtung;
- Figur 6: eine schematische 3D-Darstellung einer weiteren Befestigungsvorrichtung;
- Figur 7: eine schematische Darstellung der Befestigungsvorrichtung aus Figur 6 teilweise zerlegt;
- Figur 8: eine schematische Darstellung der Befestigungsvorrichtung aus Figur 6, die einen Sensor an einer Eisenbahnschiene befestigt.

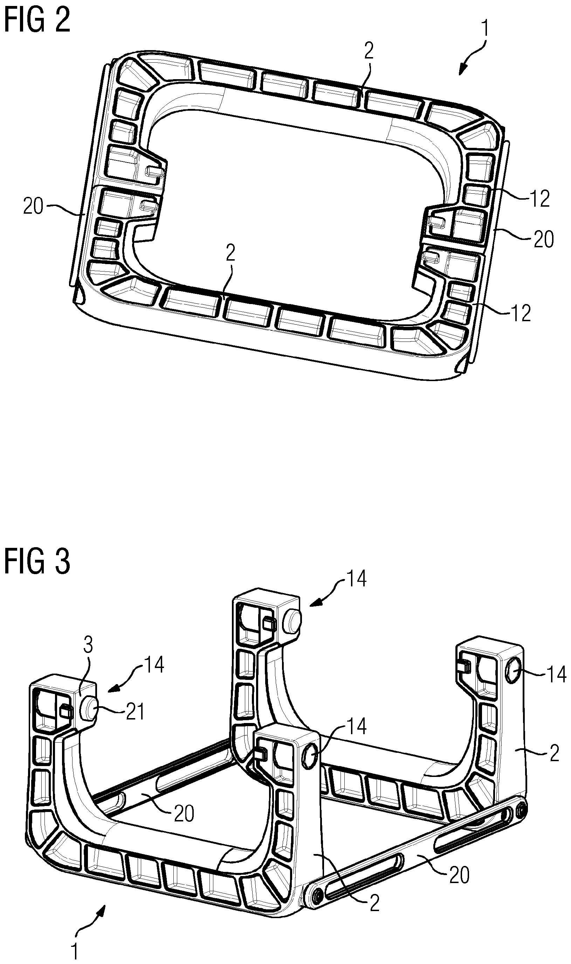

Die Erfindung wird anhand der beispielhaften Ausführungsform in Figur 2 erläutert.

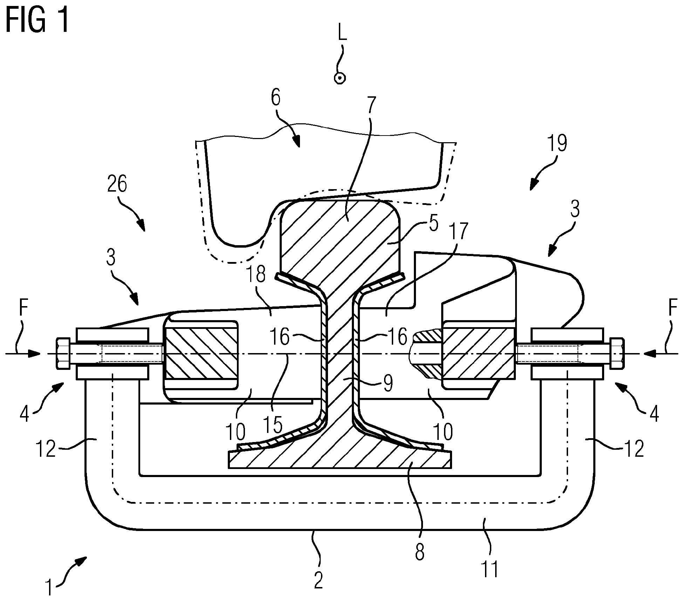

Figur 1 zeigt eine Befestigungsvorrichtung 1, die einen Spannbügel 2, Spannbereiche 3 und Spannvorrichtungen 4 aufweist. Figur 1 zeigt weiterhin eine Eisenbahnschiene 5, auf der ein Radprofil 6 eines Schienenfahrzeugs angeordnet ist. Im Bereich eines zwischen einem Schienenkopf 7 und einem Schienenfuß 8 ausgebildeten Schienenstegs 9 sind beidseitig zwei Sensoren 10 mittels der erfindungsgemäßen Befestigungsvorrichtung 1 befestigt.

Der Spannbügel 2 der Befestigungsvorrichtung 1 ist im Wesentlichen U-förmig ausgebildet mit zwei gleichlangen von einem Grundkörper 11 rechtswinklig abstehenden Schenkeln 12, an deren Enden jeweils parallel zum Grundkörper 11 verlaufende Gewindebohrungen 13 ausgebildet sind. In den Gewindebohrungen 13 sind Spannschrauben 14 vorgesehen. Die Spannschrauben 14 und die Gewindebohrungen 13 sind Teil der Spannvorrichtung 4 dieser Ausführungsform der erfindungsgemäßen Befestigungsvorrichtung 1. Die Spannschrauben 14 bilden an ihren dem Schraubenkopf gegenüberliegenden Schraubenfuß jeweils einen Spannbereich 3 der Befestigungsvorrichtung 1 aus. Die Spannbereiche 3 sind bei der beispielhaften Ausführungsform in Figur 1 Flächen, die den Sensor 10 kontaktieren, an diesem anliegen und eine Spannkraft F übertragen. Die Gewindebohrungen 13 sind so in der Befestigungsvorrichtung 1 angeordnete, dass sie entlang einer Geraden 15 verlaufen. Die somit fluchtenden Gewindebohrungen 13 und ebenfalls fluchtenden Spannschrauben 14 bewirken, dass die Spannbereiche 3 zueinander gegenüberliegend und parallel zueinander ausgerichtet sind.

Die Befestigungsvorrichtung 1 weist in der in Figur 1 dargestellten Form weiterhin zwei Adapterelemente 16 auf, die jeweils zwischen dem Sensor 10 und dem Schienensteg 9 angeordnet sind. Schienenseitig sind die Adapterelemente 16 jeweils dem Profil der Eisenbahnschiene 5 angepasst ausgebildet. Sensorseitig wiederum sind die Adapterelemente 16 jeweils für den zu befestigenden Sensor 10 angepasst ausgebildet. Beispielsweise kann sensorseitig eine Aufnahmevertiefung für den jeweiligen Sensor 10 im Adapterelement 16 ausgebildet sein. Alternativ können aber auch Bohrungen oder Stifte am Adapterelement 16 ausgebildet sein, um den jeweiligen Sensor 10 leicht positionieren zu können.

Die beiden Sensoren 10 in Figur 1 sind beispielsweise Sender 17 und Empfänger 18 eines Achszählers 19, die mittels der Befestigungsvorrichtung 1 beidseitig des Schienenstegs 9 montiert sind. Der Achszähler 19 mit seinen Sensoren 10 und der erfindungsgemäßen Befestigungsvorrichtung 1 bildet eine erfindungsgemäße Sensoranordnung 26 aus, die in Figur 1 an die Eisenbahnschiene 5 montiert ist.

Zur Befestigung der Sensoren 10 an der Eisenbahnschiene 5 werden zunächst die Adapterelemente 16 am Schienensteg 9 angeordnet. Anschließend können die Sensoren 10 leicht an den Adapterelementen 16 positioniert werden, um eine geeignet horizontale und vertikale Ausrichtung der Sensoren 10 zu gewährleisten.

Anschließend wird der Spannbügel 2 so positioniert, dass die Spannbereiche 3 beidseitig des Schienenstegs 9 angeordnet sind. Die Gerade 15 verläuft dabei im Wesentlichen quer zur Längsrichtung L der Eisenbahnschiene 5. Anschließend werden die Spannschrauben 15 angezogen und dadurch eine Spannkraft F erzeugt, die das Paket aus den Sensoren 10, den Adapterelementen 16 und dem Schienensteg 9 zusammendrückt und verspannt. Die Befestigungsvorrichtung 1 befestigt die Sensoren 10 durch die aufgebrachte Spannkraft F kraftschlüssig an der Eisenbahnschiene 5.

Der Spannbügel 2 der Befestigungsvorrichtung 1 verläuft in dem in Figur 1 dargestellten gespannten Zustand mit dem Grundkörper 11 unterhalb des Schienenfußes 8 und mit einem Abstand zu diesem. Dadurch ist die Befestigungsvorrichtung 1 lediglich über die Spannbereiche 3 in Kontakt mit den Sensoren 10 oder der Eisenbahnschiene 5, so dass eine schwimmende Befestigung der Sensoren 10 an der Eisenbahnschiene 5 realisiert ist. Da die Spannbereiche 3 paarweise gegenüberliegend ausgebildet sind, herrscht an jedem Spannbereich 3 die gleiche Spannkraft F. Entsprechend ist die vom jeweiligen Sensor 10 und dem Schienensteg 9 aufgebrachte Gegenkraft gleich groß, so dass durch die Befestigungsvorrichtung 1 keine Momente oder einseitigen Kräfte auf die Eisenbahnschiene 5 ausgeübt werden können.

Im Folgenden wird die Erfindung mit Bezug auf die beispielhafte Ausführungsform der erfindungsgemäßen Befestigungsvorrichtung 1 in den Figuren 2 bis 4 beschrieben. Dabei werden für gleiche Teile die gleichen Bezugszeichen wie bei der Befestigungsvorrichtung in Figur 1 verwendet. Der Einfachheit halber wird lediglich auf die Unterschiede zu der Befestigungsvorrichtung in der Figur 1 eingegangen.

Im Unterschied zu der Befestigungsvorrichtung in Figur 1 weist die Befestigungsvorrichtung 1 in der beispielhaften erfindungsgemäßen Ausführungsform der Figuren 2 bis 4 zwei Spannbügel 2 auf, die über zwei Traversenelemente 20 miteinander verbunden sind. Die Traversenelemente 20 sind in ihren Enden so mit den Spannbügeln 2 verbunden, dass jeder Spannbügel 2 relativ zu den Traversenelementen 20 beweglich ist. Dabei ist bei dieser beispielhaften Ausführungsform der Lagerpunkt jeweils etwa am Ende des Grundkörpers 11 des Spannbügels 2 angeordnet. Wie in den Figuren 2 und 3 dargestellt, kann die Befestigungsvorrichtung 1 dadurch von einer in Figur 2 dargestellten Montage- und Transportstellung in eine in Figur 3 dargestellten Befestigungsstellung bewegt werden. In der in Figur 2 dargestellten Montage- und Transportstellung sind die Schenkel 12 der Spannbügel 2 im Wesentlichen parallel zu den Traversenelementen 20 positioniert. Die beiden Spannbügel 2 sind durch die Traversenelemente 20 so zueinander beabstandet, dass die Schenkel 12 beider Spannbügel 2 ohne Kontakt zu den anderen in der Montage- und Transportstellung einklappbar und parallel zu den Traversenelementen 20 anordenbar sind. Dadurch ist die erfindungsgemäße Befestigungsvorrichtung 1 in der Montage und Transportstellung besonders kompakt und flach ausgebildet, so dass sie leicht tranportiert, gestapelt und bei der Montage unter dem Schienenfuß 8 hindurchschiebbar ist. In der in Figur 3 dargestellten Befestigungsstellung sind die Schenkel 12 im Wesentlichen rechtwinklig zu den Traversenelementen 20 angeordnet. Von der Montage- und Transportstellung zur Befestigungsstellung werden die Spannbügel 2 manuell ausgeklappt. Arretierungen können hierbei die gewünschte Positionierung erleichtern und sichern.

Im Gegensatz zur Befestigungsvorrichtung in Figur 1 sind die Spannschrauben 14 bei der erfindungsgemäßen Ausführungsform der Figuren 2 bis 4 mit versenkten Schraubenköpfen in den Spannbügeln 2 angeordnet. Die Spannbereiche 3 sind als rotationssymmetrische ringförmige Flächen am Fuß der Spannschraube 14 ausgebildet. Zur einfacheren Montage der Befestigungsvorrichtung 1 weisen die Spannschrauben 14 jeweils einen zylinderförmigen Zapfen 21 auf, der in einer entsprechenden Bohrung am Sensor 10 eintauchen kann.

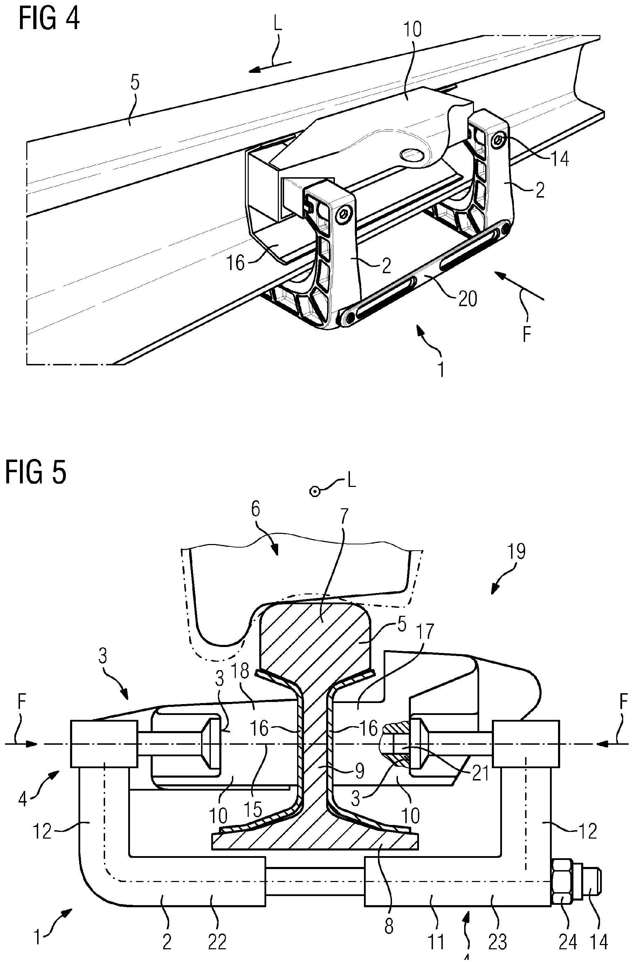

Figur 4 zeigt die Befestigungsvorrichtung 1 in der beispielhaften Ausführungsform der Erfindung der Figuren 2 bis 4 in der Befestigungsstellung, in der ein Sensor 10 an der Eisenbahnschiene 5 befestigt ist. Auf der gegenüberliegenden nicht dargestellten Seite der Eisenbahnschiene 5 ist entsprechend ein weiterer Sensor 10 durch die Befestigungsvorrichtung 1 fixiert. Die Befestigungsvorrichtung 1 in der beispielhaften Ausführungsform der Figuren 2 bis 4 weist vier Spannvorrichtungen 4 mit den jeweiligen Spannschrauben 14 auf. Dadurch wird die für die kraftschlüssige Montage der Sensoren 10 an der Eisenbahnschiene 5 erforderliche Spannkraft F auf mehrere Spannvorrichtungen 4 verteilt. Dadurch ist die einzelne Belastung, beispielsweise auf die Gewinde der Spannschrauben 14 und der Gewindebohrungen 13, entsprechend kleiner, was die konstruktive Ausgestaltung der erfindungsgemäßen Befestigungsvorrichtung 1 vereinfacht.

Bei der Befestigungsvorrichtung in Figur 1 und bei der beispielhaften Ausführungsform der Erfindung der Figuren 2 bis 4 sind die Spannvorrichtungen 4 in dem Kraftverlauf besonders nahe an den Sensoren 10 angeordnet. Dadurch wird die Spannkraft F sehr nahe an den Sensoren 10 ohne dazwischenliegende Hebel erzeugt.

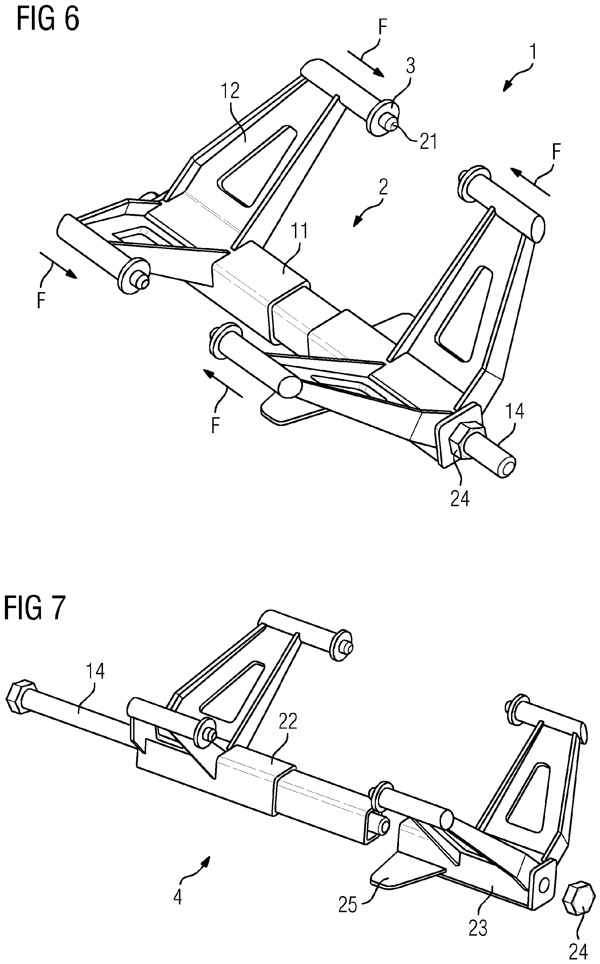

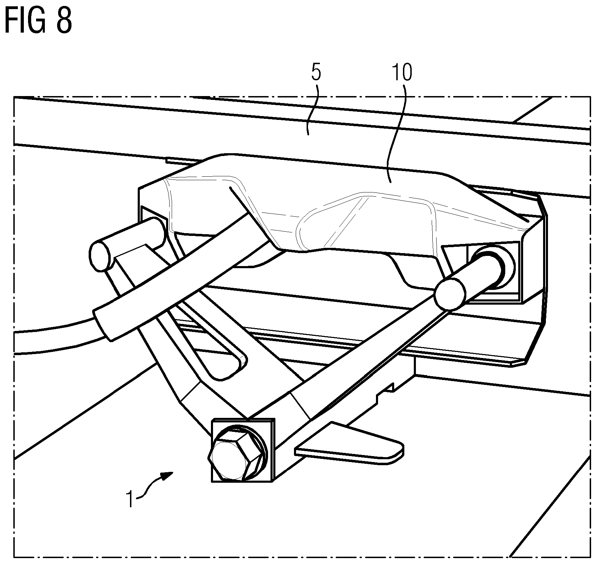

Im Folgenden wird eine zur Erfindung alternative Befestigungsvorrichtung mit Bezug auf die Figuren 5 bis 8 erläutert. Erneut werden für gleiche Bauteile zu den Vorrichtungen der Figuren 1 bis 4 die gleichen Bezugszeichen verwendet. Der Einfachheit halber wird lediglich auf die Unterschiede zu der erfindungsgemäßen Ausführungsform der Figuren 2 bis 4 eingegangen. Da die Vorrichtungen der Figur 5 und die der Figuren 6 bis 8 sehr ähnlich sind, werden sie gemeinsam beschrieben.

Im Gegensatz zu der erfindungsgemäßen Ausführungsform in den Figuren 2 bis 4 weist die Befestigungsvorrichtung 1 der Figuren 5 bis 8 lediglich eine Spannvorrichtung 4 auf. Die zentrale Spannvorrichtung 4 weist eine Spannschraube 14 auf und ist im Gegensatz zu der Ausführungsform der Figuren 2 bis 4 im Kraftfluss weiter von den Spannbereichen 3 entfernt angeordnet.

Ferner sind die Spannbügel 2 bei den Vorrichtungen der Figuren 5 bis 8 mit einem gemeinsamen Grundkörper 11 ausgebildet. Dadurch sind die Spannbügel 2 zueinander fixiert und nicht wie in der erfindungsgemäßen Ausführungsform der Figuren 2 bis 4 beweglich zueinander angeordnet. Bei der Montage der Befestigungsvorrichtung 1 der Figuren 5 bis 8 wird diese zunächst wie in Figur 7 dargestellt zerlegt. Im zerlegten Zustand wird der Grundkörper 11 von beiden Seiten unter den Schienenfuß 8 angeordnet und dort wieder zusammengebaut. Beim Zusammenbau werden die beiden Teile 22, 23 des Grundkörpers 11 wieder ineinandergesteckt und eine Mutter 24 der Spannvorrichtung 4 auf die Spannschraube 14 geschraubt. Durch das anschließende Verschrauben der Mutter 24 mit der Spannschraube 14 werden die Teile 22, 23 des Grundkörpers 11 gegeneinander bewegt und die Spannkraft F erzeugt. Dadurch wird das Paket aus Schienensteg 9, Adapterelementen 16 und den Sensoren 10 zusammengepresst und verspannt. Als einen Verdrehschutz weist die Befestigungsvorrichtung 1 der Figuren 5 bis 8 seitliche Strebenelemente 25 auf. Die Strebenelemente 25 erleichtern die Montage der Befestigungsvorrichtung 1 und verhindern ein Verdrehen des Spannbügels 2 zu den Sensoren 10, bevor die Spannvorrichtung 4 die Spannkraft F aufbringt und dadurch die Sensoren 10 befestigt.

Die erfindungsgemäße Befestigungsvorrichtung 1 ist in der beispielhaften Ausführungsform, die in den Figuren 2 bis 4 dargestellt ist, zur Befestigung von zwei Sensoren 10 auf beiden Seiten des Schienenstegs 9 beschrieben worden. Selbstverständlich kann die erfindungsgemäße Befestigungsvorrichtung 1 auch zum Befestigen von nur einem Sensor 10 auf nur einer Seite des Schienenstegs 9 verwendet werden. Hierzu kann der zweite Sensor 10 beispielsweise durch ein entsprechendes Zwischenelement (nicht dargestellt) ersetzt werden oder die Positionen der Spannbereiche 3 werden auf dieser Seite der Befestigungsvorrichtung 1 entsprechend zur Anlage direkt an der Eisenbahnschiene 5 verändert.

## Patentansprüche

1. Befestigungsvorrichtung (1) zum Befestigen wenigstens eines Sensors (10) an einer Eisenbahnschiene (5), mit wenigstens zwei Spannbügeln (2), mit wenigstens zwei gegenüberliegenden und mit zumindest einem der Spannbügel (2) verbundenen Spannbereichen (3), zwischen denen der wenigstens eine Sensor (10) und zumindest ein Teil der Eisenbahnschiene (5) anordenbar sind und eine den wenigstens einen Sensor (10) fixierende Spannkraft (F) aufbringbar ist, und
mit wenigstens einer mit einem der Spannbügel (2) verbundenen Spannvorrichtung (4), durch welche die Spannkraft (F) aufbringbar ist, wobei die Befestigungsvorrichtung (1) wenigstens ein Traversenelement (20) aufweist, wobei die zwei Spannbügel (2) mit dem Traversenelement (20) beweglich verbunden sind und die Befestigungsvorrichtung (1) von einer Montage- und Transportstellung in eine Befestigungsstellung bewegbar ist und in der Montage- und Transportstellung zum zumindest teilweisen Anordnen unterhalb eines Schienenfußes ausgebildet ist.

2. Befestigungsvorrichtung (1) nach Anspruch 1,
**dadurch gekennzeichnet, dass** zumindest einer der Spannbügel (2) so ausgestaltet ist, dass der Spannbügel (2) bei befestigtem Sensor (10) ohne Kontakt zu der Eisenbahnschiene (5) anordenbar ist.

3. Befestigungsvorrichtung (1) nach einem der oben genannten Ansprüche,
**dadurch gekennzeichnet, dass** die wenigstens eine Spannvorrichtung (4) wenigstens eine Spannschraube (14) aufweist.

4. Befestigungsvorrichtung (1) nach einem der oben genannten Ansprüche,
**dadurch gekennzeichnet, dass** die Befestigungsvorrichtung (1) mehrere Spannvorrichtungen (4) aufweist.

5. Befestigungsvorrichtung (1) nach Anspruch 4,
**dadurch gekennzeichnet, dass** die Spannvorrichtungen (4) jeweils paarweise gegenüberliegend und die Spannbereiche (3) ausbildend angeordnet sind.

6. Befestigungsvorrichtung (1) nach einem der oben genannten Ansprüche,
**dadurch gekennzeichnet, dass** die Befestigungsvorrichtung (1) wenigstens ein Adapterelement (16) aufweist, das zwischen Eisenbahnschiene (5) und Sensor (10) anordenbar ist.

7. Sensoranordnung,
mit einer Befestigungsvorrichtung (1) nach einem der oben genannten Ansprüche und mit wenigstens einem Sensor (10), der zur Befestigung an einer Eisenbahnschiene (5) ausgebildet ist.

8. Verfahren zum Befestigen wenigstens eines Sensors (10) an einer Eisenbahnschiene (5) durch eine Befestigungsvorrichtung (1),
bei dem der wenigstens eine Sensor (10) zur Eisenbahnschiene (5) positioniert wird und
zumindest der wenigstens eine Sensor (10) und die Eisenbahnschiene (5) miteinander verspannt werden, wobei die Befestigungsvorrichtung (1) zunächst in einer Montage- und Transportstellung zumindest teilweise unterhalb des Schienenfußes (8) angeordnet wird und anschließend in eine Befestigungsstellung bewegt wird und
wobei die Befestigungsvorrichtung (1) wenigstens zwei Spannbügel (2), wenigstens zwei gegenüberliegende und mit zumindest einem der Spannbügel (2) verbundene Spannbereiche (3), wenigstens eine mit einem der Spannbügel (2) verbundene, den wenigstens einen Sensor (10) fixierende Spannkraft (F) aufbringende Spannvorrichtung (4) und wenigstens ein Traversenelement (20) aufweist, wobei die zwei Spannbügel (2) mit dem Traversenelement (20) beweglich verbunden sind.

9. Verfahren nach Anspruch 8,
**dadurch gekennzeichnet, dass** die Befestigungsvorrichtung (1) zur Befestigung des wenigstens einen Sensors (10) zumindest teilweise unterhalb eines Schienenfußes (8) der Eisenbahnschiene (5) und ohne Kontakt zum Schienenfuß (8) angeordnet wird.

10. Verfahren nach einem der Ansprüche 8 bis 9,
**dadurch gekennzeichnet, dass** zwischen dem wenigstens einen Sensor (10) und der Eisenbahnschiene (5) vor dem Verspannen wenigstens ein Adapterelement (16) angeordnet wird.

## Claims

1. Fastening device (1) for fastening at least one sensor (10) to a railway rail (5),
with at least one clamping bow (2),
with at least two opposite clamping regions (3) connected to at least one of the clamping bows (2), between which the at least one sensor (10) and at least a part of the railway rail (5) can be arranged and a clamping force (F) fixing the at least one sensor (10) can be applied, and with at least one clamping device (4) connected to the clamping bow (2), by means of which the clamping force (F) can be applied, wherein the fastening device (1) has at least one crossbeam element (20), wherein the two clamping bows (2) are connected to the crossbeam element (20) in a movable manner, and the fastening device (1) can be moved from an assembly and transport position into a fastening position and in the assembly and transport position is embodied to be arranged at least partially underneath a rail foot.

2. Fastening device (1) according to claim 1,
**characterised in that**
at least one of the clamping bows (2) is embodied in such a way that when the sensor (10) is fastened, the clamping bow (2) can be arranged without contact to the railway rail (5).

3. Fastening device (1) according to one of the preceding claims,
**characterised in that**
the at least one clamping device (4) has at least one clamping bolt (14).

4. Fastening device (1) according to one of the preceding claims,
**characterised in that**
the fastening device (1) has a multiplicity of clamping devices (4).

5. Fastening device (1) according to claim 4,
**characterised in that**
the clamping devices (4) are in each case arranged in oppositely located pairs and forming the clamping regions (3).

6. Fastening device (1) according to one of the preceding claims,
**characterised in that**
the fastening device (1) has at least one adapter element (16), which can be arranged between railway rail (5) and sensor (10).

7. Sensor arrangement,
with a fastening device (1) according to one of the preceding claims and with at least one sensor (10), which is embodied for fastening to a railway rail (5).

8. Method for fastening at least one sensor (10) to a railway rail (5) by means of a fastening device (1),
in which the at least one sensor (10) is positioned on the railway rail (5) and
at least the at least one sensor (10) and the railway rail (5) are clamped together, wherein the fastening device (1) is initially arranged in an assembly and transport position at least partially underneath the rail foot (8) and then moved into a fastening position and
wherein the fastening device (1) has at least two clamping bows (2), at least two opposite clamping regions (3) connected to at least one of the clamping bows (2), at least one clamping device (4) connected to one of the clamping bows (2) and applying the clamping force (F) which fixes the at least one sensor (10) and at least one crossbeam element (20), wherein the two clamping bows (2) are connected to the crossbeam element (20) in a moveable manner.

9. Method according to claim 8,
**characterised in that**
the fastening device (1) for fastening of the at least one sensor (10) is arranged at least partially underneath a rail foot (8) of the railway rail (5) and without contact to the rail foot (8).

10. Method according to one of claims 8 to 9,
**characterised in that** at least one adapter element (16) is arranged between the at least one sensor (10) and the railway rail (5) before clamping.

## Revendications

1. Dispositif (1) de fixation pour la fixation d'au moins un capteur (10) sur un rail (5) de chemin de fer,
comprenant au moins deux étriers (2) de serrage,
comprenant au moins deux régions (3) de serrage, qui sont opposées, qui sont reliées à au moins l'un des étriers (2) de serrage et entre lesquelles peut être disposés le au moins un capteur (10) et au moins une partie du rail (5) de chemin de fer et une force (F) de serrage immobilisant le au moins un capteur (10) peut être appliquée,
et
ayant au moins un dispositif (4) de serrage, qui est relié à l'un des étriers (2) de serrage et par lequel la force (F) de serrage peut être appliquée, le dispositif (1) de fixation ayant au moins un élément (20) de traverse, dans lequel les deux étriers (2) de serrage sont reliés en étant mobiles à l'élément (20) de traverse et le dispositif (1) de fixation peut passer d'une position de montage et de transport à une position de fixation et, dans la position de montage et de transport, est constitué pour le montage, au moins en partie, en dessous d'un patin du rail.

2. Dispositif (1) de fixation suivant la revendication 1, **caractérisé en ce que**
au moins l'un des étriers (2) de serrage est conformé de manière à pouvoir monter l'étrier (2) de serrage, alors que le capteur (10) est fixé, sans contact avec le rail (5) de chemin de fer.

3. Dispositif (1) de fixation suivant l'une des revendications mentionnées ci-dessus,
**caractérisé**
**en ce que** le au moins un dispositif (4) de serrage a au moins une vis (14) de serrage.

4. Dispositif (1) de fixation suivant l'une des revendications mentionnées ci-dessus,
**caractérisé**
**en ce que** le dispositif (1) de serrage a plusieurs dispositifs (4) de serrage.

5. Dispositif (1) de fixation suivant la revendication 4,
**caractérisé**
**en ce que** les dispositifs (4) de serrage sont disposés en étant opposés, respectivement, par paire et en constituant les régions (3) de serrage.

6. Dispositif (1) de fixation suivant l'une des revendications mentionnées ci-dessus,
**caractérisé**
**en ce que** le dispositif (1) de fixation a au moins un élément (16) d'adaptateur, qui peut être disposé entre le rail (5) de chemin de fer et le capteur (10).

7. Agencement de capteur,
comprenant un dispositif (1) de fixation suivant l'une des revendications mentionnées ci-dessus et au moins un capteur (10), qui est constitué pour être fixé à un rail (5) de chemin de fer.

8. Procédé de fixation d'au moins un capteur (10) à un rail (10) de chemin de fer par un dispositif (1) de fixation, dans lequel on met le au moins un capteur (10) en position par rapport au rail (5) de chemin de fer et
on bloque l'un avec l'autre au moins le au moins un capteur (10) et le rail (5) de chemin de fer, dans lequel on met le dispositif (1) de fixation d'abord dans une position de montage et de transport, au moins en partie, en dessous du patin (8) de rail et on le fait passer ensuite dans une position de fixation et
dans lequel le dispositif (1) de fixation a au moins deux étriers (2) de serrage, au moins deux régions (3) de serrage, qui sont opposées l'une à l'autre et qui sont reliées à au moins l'un des étriers (2) de serrage, au moins un dispositif (4) de serrage relié à l'un des étriers (2) de serrage et appliquant une force (F) de serrage immobilisant le au moins un capteur (10) et au moins un élément (20) de traverse, les deux étriers (2) de serrage étant reliés, avec possibilité de se déplacer, à l'élément (20) de traverse.

9. Procédé suivant la revendication 8,
**caractérisé en ce que**
l'on met le dispositif (1) de fixation pour la fixation du au moins un capteur (10), au moins en partie, en dessous d'un patin (8) du rail (5) de chemin de fer et sans contact avec le patin (8) du rail.

10. Procédé suivant l'une des revendications 8 à 9,
**caractérisé en ce que**
l'on met au moins un élément (16) d'adaptateur entre le au moins un capteur (10) et le rail (5) de chemin de fer avant le blocage.
